# EUROPÄISCHE PATENTANMELDUNG

(11) **EP 1 990 607 A1**
(43) Veröffentlichungstag der Anmeldung: **12.11.2008**
(21) Anmeldenummer: 07107973.5
(22) Anmeldetag: 10.05.2007
(51) Int. Cl.: G01C 15/00

(54) **Positionsbestimmungsverfahren für ein geodätisches Vermessungsgerät**

(71) Anmelder: Leica Geosystems AG, 9435 Heerbrugg (CH)
(72) Erfinder: MÖLLER, Bernd, CH-9450, Lüchingen (CH)
(74) Vertreter: Büchel, Kaminski & Partner

(57) **Zusammenfassung**

In einem Positionsbestimmungsverfahren für ein eine Entfernungs- und Winkelmessfunktionalität aufweisendes geodätisches Gerät, z.B. eine Totalstation (1), erfolgt ein Bestimmen der relativen Lage von geodätischem Gerät und mit Reflektoren (2) markierten Referenzpunkten (P₁-Pₙ) einer Referenzpunktmenge durch Messen von jeweils Entfernung (D₁-Dₙ) und wenigstens einem Winkel (ϕ₁-ϕₙ, θ₁-θₙ) von dem geodätischen Gerät zu den Referenzpunkten als Referenzgrössen, wobei die Referenzgrössen in einem gerätebezogenen Bezugssystem bestimmt werden.

Für die aus den Referenzpunkten (P₁-Pₙ) gebildete Referenzpunktmenge und eine Bezugspunktmenge von anmessbaren Bezugspunkten (A-G), deren Positionen in einem äusseren Bezugssystem bekannt ist, werden gemeinsame Elemente identifiziert, wobei ein Ableiten der relativen Lage der Referenzpunkte (P₁-Pₙ) aus den Referenzgrössen und ein Identifizieren und Zuordnen der gemeinsamen Elemente anhand der relativen Lage der Referenzpunkte (P₁-Pₙ) erfolgen. Die Position (S) des geodätischen Gerätes im äusseren Bezugssystem wird aus den gemeinsamen Elementen und deren Positionen in einem äusseren Bezugssystem bestimmt.

## Beschreibung

Die Erfindung betrifft ein Positionsbestimmungsverfahren für ein geodätisches Gerät nach dem Oberbegriff des Anspruch 1.

Für die Aufnahme von Eigenschaften definierter Punkte in einer Messumgebung, insbesondere von Daten mit räumlichem Bezug, sind seit der Antike eine Vielzahl von Messverfahren bekannt. Als räumliche Standarddaten werden dabei der Ort eines Messgerätes nebst evtl. vorhandener Referenzpunkte, sowie Richtung, Entfernung und Winkel zu Messpunkten aufgenommen. Während in vielen Anwendungen die Position des geodätischen Messgerätes bekannt ist und unbekannte Positionen angemessen werden, so existieren jedoch auch Anwendungen, bei denen zwar einige Messpunkte bekannt bzw. vermessen sind, der Standort des Vermessungsgeräts aber unbekannt ist.

Ein allgemein bekanntes Beispiel für solche Vermessungsgeräte bzw. geodätische Geräte stellt der Theodolit bzw. eine Totalstation dar. Eine Übersicht über geodätische Messvorrichtungen des Stands der Technik bieten "Elektronische Entfernungs- und Richtungsmessung" von R. Joeckel und M. Stober, 4. Auflage, Verlag Konrad Wittwer, Stuttgart 1999. Solche Geräte verfügen über Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Grundsätzlich kann die eigene Position, d.h. die Stationskoordinaten des Messgerätes, als sogenannte freie Stationierung aus Messungen zu bekannten, fixen Messpunkten abgeleitet werden. Unter der freien Stationierung versteht man dabei die Bestimmung der Koordinaten eines Neupunktes aus Messungen, die von diesem Neupunkt aus auf umliegende eingemessene, d.h. bekannte Messpunkte gemacht wurden. Solche Messungen sind Richtungs- und Distanzmessungen.

Zuerst wird die Position der umliegenden Punkte relativ zum Standpunkt in einem lokalen Koordinatensystem berechnet. Mit Hilfe der bekannten Koordinaten der umliegenden Punkte werden, wenn mehr als die notwendige Anzahl Messungen vorliegen, ausgeglichene Transformationsparameter berechnet, woraus dann die gesuchten Koordinaten des Neupunktes folgen. Der Vorgang kann an einem Beispiel veranschaulicht werden: Distanzen und Richtungen werden zu einigen umliegenden Punkten gemessen und die Position dieser Punkte relativ zum Standort, d.h. in einem lokalen Koordinatensystem, auf einer Klarsichtfolie aufgetragen. Eine Karte des gewünschten Koordinatensystems wird nun dieser Folie unterlegt. Dieses System kann das Landeskoordinatensystem oder aber auch das Koordinatensystem eines spezifischen Bauprojektes sein. Auf dieser Karte sind nun auch die Messpunkte zu finden. Die Folie wird gedreht und verschoben, bis die Folienpunkte möglichst gut mit den auf der Karte eingezeichneten Punkten übereinstimmen, was algorithmisch durch Ausgleichungsrechnung nach der Methode der kleinsten Quadrate erfolgen kann. Die Koordinaten des Neupunktes können nun auf der Karte abgelesen werden. Dieses Prinzip wird dabei nicht graphisch, sondern analytisch angewandt, wobei stets die Punktnummer eines Messpunktes und die Messwerte vom geodätischen Gerät zu diesem Messpunkte bekannt und zugeordnet sein müssen.

Die hierfür erforderlichen Berechnungen sind softwaremässig in den meisten modernen Totalstationen bzw. Tachymetern integriert. Dies bedeutet aber immer noch, dass Punktnummern und Koordinaten der angemessenen Messpunkte verknüpft eingegeben werden müssen; die Koordinaten des Standortes und andere gewünschte Ergebnisse wie Varianzen, etc. werden dann automatisch aus den Messungen berechnet und können gespeichert oder ausgegeben werden. Die minimale Anzahl Messungen, die für solche Berechnung erforderlich umfassen die Bestimmung von Distanz und Richtung zu wenigstens 2 Messpunkten. In der Praxis werden jedoch, sofern möglich, darüber hinausgehende Messungen durchgeführt, um durch Überbestimmung Angaben über die Zuverlässigkeit der Resultate zu erhalten.

Algorithmen, mit denen aus Messungen von Richtung und Distanz zu mehr als zwei Fixpunkten die Standortkoordinaten berechnet werden, können bspw. Ähnlichkeitstransformationen sein, verbunden mit einer vermittelnden Ausgleichung, die in der Fachliteratur auch Helmerttransformation genannt wird.

Das Aufstellen einer Totalstation und das Bestimmen der eigenen Stationskoordinaten anhand bekannter Messpunkte sind bezüglich einer Benutzerführung zumeist auf den ausgebildeten Vermessungsingenieur zugeschnitten. Der Anwender muss die zur Berechnung der Stationskoordinaten verwendeten Messpunkte im Feld sicher identifizieren und ihnen die korrekten Punktnummern, welche die Verknüpfung mit der Position des Messpunktes herstellen, zuweisen. Dies ist in der Regel nur mit einem Plan möglich, in welchem Gelände und Messpunkte eingetragen sind. Ein entsprechendes manuelles Zuweisen von aktueller Messung zu Messpunkt ist somit zeitaufwendig und fehlerbehaftet.

Zudem erfordern spezielle Anwendungen, wie z.B. der Einsatz von Totalstationen in Anwendungen der Maschinensteuerung, dass auch nicht speziell ausgebildete Vermessungsfachleute die Geräte bedienen müssen. Bisherige Gerätekonfigurationen und Benutzerführungen sind auf diese Anwendergruppe jedoch nicht zugeschnitten.

Positionsbestimmungsverfahren des Stands der Technik basieren somit auf dem Vermessen bekannter Messpunkte, deren Messwerte zusammen mit der Punktnummer oder den Positionsdaten der Messpunkte aufgenommen bzw. weiterverarbeitet werden. Diese notwendige Zuordnung von Messwerten zu Punkten bei der Messung verzögert das Verfahren, erhöht die Fehleranfälligkeit und erschwert die Automatisierbarkeit.

Eine Aufgabe der vorliegenden Erfindung besteht deshalb darin, ein verbessertes und vereinfachtes Positionsbestimmungsverfahren für ein geodätisches Gerät bereitzustellen.

Eine weitere Aufgabe der vorliegenden Erfindung besteht in der Verringerung der Fehleranfälligkeit und des Zeitbedarfs für eine Positionsbestimmung.

Eine weitere Aufgabe der vorliegenden Erfindung besteht darin, eine automatisierte Positionsbestimmung zu ermöglichen.

Diese Aufgaben werden erfindungsgemäss durch die Merkmale des Anspruchs 1 oder durch Merkmale der abhängigen Ansprüche gelöst bzw. diese Lösungen weitergebildet.

Das erfindungsgemässe Positionsbestimmungsverfahren löst sich von der bei der Messung einzuhaltenden notwendigen Verknüpfung von Punktnummer bzw. Punktidentifikation und Aufnahme der Messdaten. Der Ablauf der freien Stationierung wird soweit vereinfacht, dass die angezielten Messpunkte nicht mehr über die Punktnummer identifiziert werden müssen, so dass schliesslich eine Messung zu den bekannten Messpunkten vollautomatisch erfolgen kann.

Auch das erfindungsgemässe Verfahren beruht auf der Vermessung von bekannten Messpunkten. Hierfür wird ein geodätisches Messgerät, wie z.B. eine Totalstation, auf einem zu bestimmenden Punkt positioniert. Nachfolgend werden automatisch oder manuell von dieser Position einsehbare Messpunkte vermessen, wobei Distanz und ein oder zwei Winkel vermessen werden. Beispielsweise wird durch eine Totalstation ein Scan mit einem definierbaren vertikalen Öffnungswinkel über den Vollkreis durchgeführt, bei dem auf den Messpunkten angebrachte Prismen automatisch erkannt und vermessen werden. Zu allen gefundenen Prismen wird Horizontalrichtung, Vertikalwinkel und Distanz gemessen. Der Fall der Messung nur eines Winkels kann auf ebenen Flächen unter Umständen genügen, wie z.B. auf Flugfeldern. Durch die gemessenen Werte wird die Position von Messpunkten im eigenen Bezugssystem des Messgerätes festgelegt. Dabei ist die relative Lage der Messpunkte zueinander, wie auch zum Messgerät bekannt.

Um eine Verknüpfung mit dem äusseren Bezugssystem und damit eine absolute Positionierung zu ermöglichen, müssen zumindest einige der Messwerte als Referenzpunkte den bekannten Messpunkten als Bezugspunkten zugeordnet werden.

Durch diese nach oder auch sukzessive während des Vorgangs der Messwertaufnahme erfolgende Zuordnung wird die Verknüpfung hergestellt, die bei Verfahren des Stands der Technik während jeder einzelnen Messung, d.h. nach Identifikation und in Kenntnis des konkret angemessenen Mess- bzw. Bezugspunktes, erfolgt.

Erfindungsgemäss erfolgt die Zuordnung von Referenz- zu Bezugspunkten, d.h. die Identifikation des vermessenen Punktes, vor einer Positionsbestimmung oder zugleich mit dieser. Zur Zuordnung stehen dabei verschiedene Ansätze, wie z.B. aus der Bildverarbeitung, der Optimierung oder der Graphentheorie zur Verfügung.

Beispielsweise kann aus der relativen Lage der Punkte im lokalen Bezugssystem des Messgerätes ein Muster abgeleitet werden, das mit Mitteln der Bildverarbeitung mit einem aus den Messpunkten abgeleiteten Muster vergleichen wird. Hierfür sind beispielsweise Ansätze des Pattern Matching geeignet, bei denen ein Suchalgorithmus ermittelt, ob und wo sich das gegebene Muster der gemessenen Referenzpunkte im durch die Messpunkte definierten Suchbereich wiederfindet. In ähnlicher Weise kann auch ein formbasiertes Matching verwendet werden, bei dem nach Kanten gesucht wird. Es werden also nicht Punktmuster miteinander verglichen, sondern deren Verbindungslinien als Kanten. Solche Verfahren können in Hinblick auf das Laufzeitverhalten vorteilen bieten.

Während die Bildverarbeitung auch die Lage der Punkte relativ zueinander und in ihrer Gesamtheit betrachtet, können auch Verfahren mit reduzierter Information verwendet werden, bei denen die nur Horizontaldistanzen zwischen allen gemessenen Punkten berechnet und direkt mit den Horizontaldistanzen zwischen den in einem Messpunktverzeichnis gespeicherten Punkten verglichen werden. Dadurch lassen sich die angezielten Punkte identifizieren so lange sie zufällig im Gelände verteilt sind, d.h. nicht alle den gleichen Abstand voneinander aufweisen.

Eine gewisse Verbindung stellen Verfahren der graphischen Optimierung dar, bei denen beispielsweise alle möglichen Verbindungen zwischen den Punkten nach Richtung und Distanz als Graph dargestellt werden. Diese Anordnung von Knoten und Kanten kann dann mit einer in gleicher oder ähnlicher Weise erzeugten Repräsentation der Messpunkte verglichen werden. Solche Ansätze bieten ebenfalls die Möglichkeit der Datenreduktion, z.B. indem ein Minimalgerüst bzw. Minimalspannbaum für den Graphen der Referenzpunkt erzeugt wird, das nachfolgend in den Graphen der Bezugspunkte, d.h. der Messpunkte, eingepasst wird. Bei einer Übereinstimmung sind die entsprechenden Punkte zugeordnet. Hierbei kann das Verfahren auch mehrstufig erfolgen, z.B. indem zuerst der Minimalspannbaum eingepasst und dessen korrekte Lage durch sukzessives Hinzufügen weiterer Kanten verifiziert wird. Eine Variante hiervon wäre auch die Einordnung der längsten Kante des Graphen der Referenzpunkte in den Graphen der Bezugspunkte. Nachfolgend werden solange nächstlängere Kanten eingefügt, bis die erforderliche Zahl von Punkten zugeordnet ist. Dieser Ansatz setzt jedoch eine ausreichende Spreizung in der Verteilung der Kantenlängen voraus.

Da auch die relative Lage des Messgerätes zu den Referenzpunkten bekannt ist und letztere nach erfolgter Zuordnung mit den Bezugspunkten korreliert sind, so kann auch direkt die Position des Messgerätes abgeleitet werden. Alternativ kann dieser Zuordnungsschritt aber auch nur den Ausgangspunkt für herkömmliche Verfahren bilden.

Aufgrund der grösseren Zahl von Punkten und der verwendeten Ansätze können auch Fehler mitverarbeitet werden, wenn entsprechende Schwellen geeignet gesetzt werden oder eine gewisse Anzahl von nicht-passenden Punkten akzeptiert wird. Solche Fehler können entstehen, wenn vorhandene Messpunkte falsch im Messpunktverzeichnis eingetragen oder falsch positioniert sind. Eine andere Fehlerquelle sind Messungen zu reflektierenden Oberflächen, welche fälschlich als Messungen zu Reflektoren interpretiert und weiterverarbeitet werden. Beispielsweise kann nun ein erfindungsgemässes Positionsbestimmungsverfahren so eingestellt werden, dass es bei einer sehr guten Übereinstimmung von 40 Referenz- und Bezugspunkten die fehlende Übereinstimmung von 3 oder 4 Punkten als Fehler interpretiert und diese Punkte nicht weiter berücksichtigt. Eine solche Schwelle kann dabei auch unter Berücksichtigung der Verteilung von Mess- bzw. Bezugspunkten abgeleitet werden.

Ein erfindungsgemässes Positionsbestimmungsverfahren wird nachfolgend anhand von in der Zeichnung schematisch dargestellten Ausführungsbeispielen rein beispielhaft näher beschrieben. Im einzelnen zeigen
- Fig.1: die schematische Darstellung einer typischen Vermessungssituation im Baubereich;
- Fig.2: die schematische Darstellung der Aufnahme von Messgrössen;
- Fig.3: zwei Grundkonzeptionen des erfindungsgemässen Positionsbestimmungsverfahrens;
- Fig.4a-b: die schematische Darstellung des Prinzips des erfindungsgemässen Positionsbestimmungsverfahrens;
- Fig.5: ein erstes Ausführungsbeispiel des erfindungsgemässen Positionsbestimmungsverfahrens;
- Fig. 6: eine Variante des ersten Ausführungsbeispiels des erfindungsgemässen Positionsbestimmungsverfahrens;
- Fig.7: eine erste Variante eines zweiten Ausführungsbeispiels des erfindungsgemässen Positionsbestimmungsverfahrens;
- Fig.8a-b: eine zweite Variante des zweiten Ausführungsbeispiels des erfindungsgemässen Positionsbestimmungsverfahrens; und

- Fig.9a-b: eine dritte Variante mit Behandlung von Fehlmessungen für das zweite Ausführungsbeispiel des erfindungsgemässen Positionsbestimmungsverfahrens.

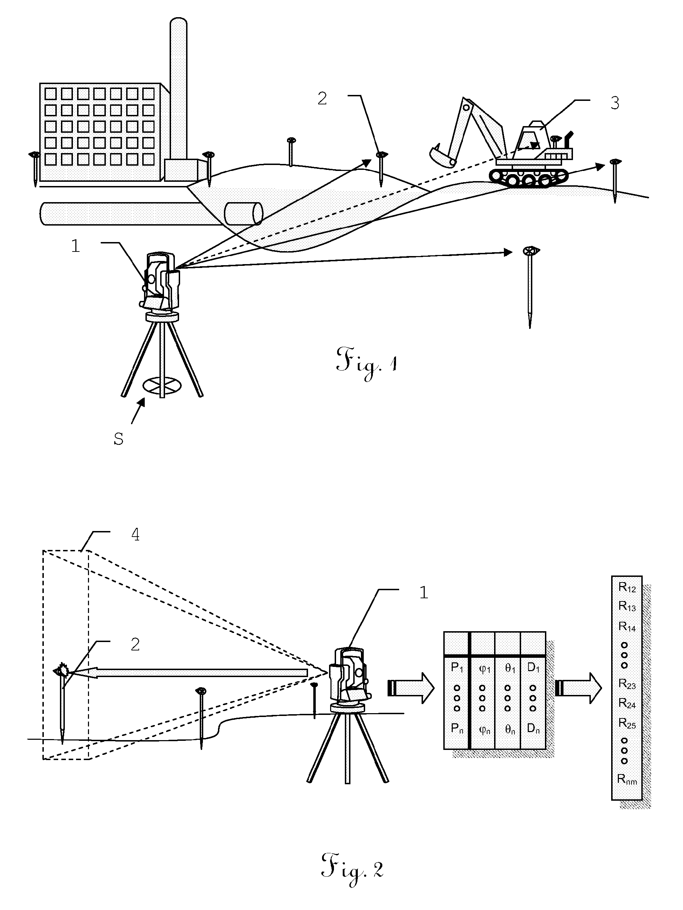

Fig.1 erläutert schematisch eine typische Vermessungssituation im Baubereich als Beispiel für die Positionsbestimmung eines geodätischen Gerätes. Hierbei wird eine Totalstation 1 als Entfernungs- und Winkelmessfunktionalität aufweisendes geodätisches Gerät an einem Stationierungspunkt S aufgestellt, der gleichzeitig das gerätebezogene, innere Referenzsystem definiert. Wird ein unbekannter Stationierungspunkt S gewählt, so kann die Totalstation durch Referenzmessungen zu Reflektoren 2, die an bekannten, eingemessenen Bezugspunkten aufgestellt sind, ihre eigene Position auch absolut bestimmen. Hierfür werden für jeden Reflektor 2 dessen Punktnummer sowie die Messwerte im Referenzsystem aufgenommen. Nach der Vermessung einer ausreichenden Zahl von Reflektoren 2 bzw. Bezugspunkten kann anhand der relativen Lage von Totalstation 2 und Reflektoren 2, sowie den über die Punktnummer in einem Bezugspunktverzeichnis zugeordneten absoluten Positionen der Reflektoren 2 der Stationierungspunkt S auch im äusseren Bezugsystem bestimmt und damit die Totalstation 1 absolut positioniert werden.

Nach dem Positionierungsvorgang können dann durch die Totalstation 1 Messungen zu weiteren Zielen durchgeführt werden, deren Position bestimmt werden soll. In diesem Beispiel kann nachfolgend die Position einer Baumaschine 3 bestimmt und kontinuierlich überwacht oder verfolgt werden.

Die Aufnahme der mit den Messungen verknüpften Messgrössen wird in Fig.2 veranschaulicht. In diesem Beispiel erfolgt der Vermessungsvorgang automatisch, indem die Totalstation 1 einen Laserstrahl mit fächerförmig emittiert. Dieser überstreicht mit seinem vertikal geöffneten Querschnitt 4 einen horizontalen Bereich, z.B. 360°, in dem alle sich befindlichen Reflektoren 2 anhand ihres Reflexionsvermögens identifiziert und automatisch vermessen werden. Hierbei werden die angemessenen Reflektoren 2 fortlaufend mit einer Referenzpunktnummer Pᵢ mit i=1...n indiziert, zu der jeweils ein Horizontal- und Vertikalwinkel ϕᵢ bzw. θᵢ sowie die Distanz Dᵢ zum Messgerät ermittelt und abgespeichert werden. Die Messwerte werden somit im inneren Bezugssystem des Gerätes erfasst und dort den fortlaufend vermessenen Punkten zugeordnet. Aus den erfassten Messwerten ϕᵢ,θᵢ und Dᵢ können dann auch die Distanzen oder Radien Rᵢⱼ der Referenzpunkte P₁ bis Pₙ untereinander, d.h. deren relative Entfernung zueinander, abgeleitet werden.

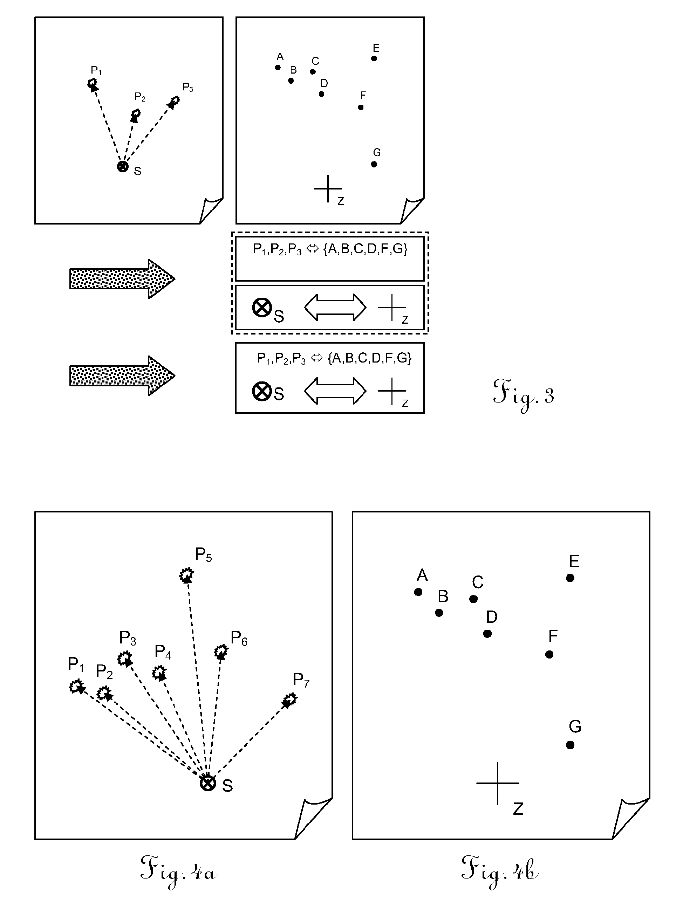

Im Regelfall werden die Zahlen der Bezugspunkte und der Referenzpunkte nicht identisch sein. Die Gründe liegen beispielsweise darin, dass nicht alle vorhandenen Bezugspunkte vom Stationierungspunkt S aus erfasst und vermessen werden können oder dass Reflexe fälschlich als Reflektoren identifiziert und vermessen werden, die einen andersartigen Ursprung haben, z.B. aufgrund von Reflexionen an spiegelnden Glasoberflächen an Gebäuden oder Fahrerkabinen von Baumaschinen. Wie in Fig.3 exemplarisch dargestellt, werden in diesem Beispiel drei Referenzpunkte P₁ bis P₃ manuell oder automatisch vermessen, so dass deren durch Pfeile angedeutete relative Lage im Bezugssystem des Gerätes, d.h. relativ zum Stationierungspunkt S, bekannt sind.

Das erfindungsgemässe Positionsbestimmungsverfahren muss nun zwei Teilaufgaben lösen
- die Zuordnung der Referenzpunkte P₁ bis P₃ zu den entsprechenden Bezugspunkten der Bezugspunktmenge {A,B,C,D,E,F,G} und
- die Bestimmung der Lage des Stationierungspunktes S relativ zum Ursprung Z des äusseren Bezugssystems, d.h. die Positionsbestimmung des Standorts des geodätischen Messgerätes.

Diese zwei Teilaufgaben führen zu den zwei in Fig.3 dargestellten Grundkonzeptionen des erfindungsgemässen Positionsbestimmungsverfahrens.

Zum einen können - wie anhand des oberen Pfeils dargestellt - beide Teilaufgaben separat und sequentiell durchgeführt werden, d.h. zuerst erfolgt eine Zuordnung der übereinstimmenden Referenz- und Bezugspunkte, somit eine Identifikation der gemeinsamen Elemente von Referenz- und Bezugspunktmenge. Danach erfolgt eine Bestimmung der Geräteposition, wobei auch bekannte Verfahren des Stands der Technik zur Anwendung kommen können, d.h. das Identifizieren und Zuordnen der gemeinsamen Elemente erfolgt vor dem Bestimmen der Position des geodätischen Gerätes.

Zum anderen können jedoch erfindungsgemäss - wie mit dem unteren Pfeil angedeutet - Zuordnung und Positionsbestimmung auch in einem Schritt erfolgen, d.h. das Identifizieren und Zuordnen der gemeinsamen Elemente und das Bestimmen der Position des geodätischen Gerätes erfolgen gemeinsam.

In Fig.4a-b wird das Prinzip des erfindungsgemässen Positionsbestimmungsverfahrens an einem Beispiel in graphischer Darstellung veranschaulicht. Wie in Fig.4a gezeigt, wird durch die Totalstation eine Reihe von Messungen vom Stationierungspunkt S zu Referenzpunkten P₁-P₇ durchgeführt, welche zumindest teilweise anmessbaren Bezugspunkten einer Bezugspunktmenge entsprechen, ohne dass diese Referenzpunkte in ihrer Lage im äusseren Bezugssystem oder die Zuordnung zu Bezugspunkten bekannt sind. Dargestellt sind diese Messungen durch die Pfeile vom Stationierungspunkt S zu den durch die Reflexe schematisch dargestellten Referenzpunkten P₁-P₇. Aufgenommen werden hierbei lediglich die Richtung, d.h. zumindest ein Winkel, und die Distanz als Referenzgrössen, d.h. im gerätebezogenen inneren Bezugssystem, also ausgehend vom Stationierungspunkt S. Für die Referenzpunkte P₁-P₇ der Referenzpunktmenge wird aus den Referenzgrössen somit nur die relative Lage zum Messgerät bestimmt. Durch die beim Erfassen der Referenzgrössen nicht zwingend erforderliche Zuordnung von Referenzpunkt zu Bezugspunkt kann auch ein automatisiertes Erfassen und Vermessen der Referenzpunkte P₁-P₇ problemlos erfolgen.

In Fig.4b wird die Bezugspunktmenge mit den Bezugspunkten A-G veranschaulicht, wobei die Lage der Bezugspunkte in einem äusseren Bezugssystem relativ zu dessen Ursprung Z bekannt ist. Um nun die aktuelle Position des Messgerätes, d.h. dessen Stationierungspunkt, im äusseren Bezugssystem zu bestimmen, werden gemeinsame Elemente von Referenzpunktmenge und Bezugspunktmenge identifiziert und zugeordnet. Diese gemeinsamen Elemente erlauben die Verknüpfung von Positionen der Bezugspunkte mit der relativen Lage der Referenzpunkte und damit ein Bestimmen der Position des geodätischen Gerätes im äusseren Bezugssystem.

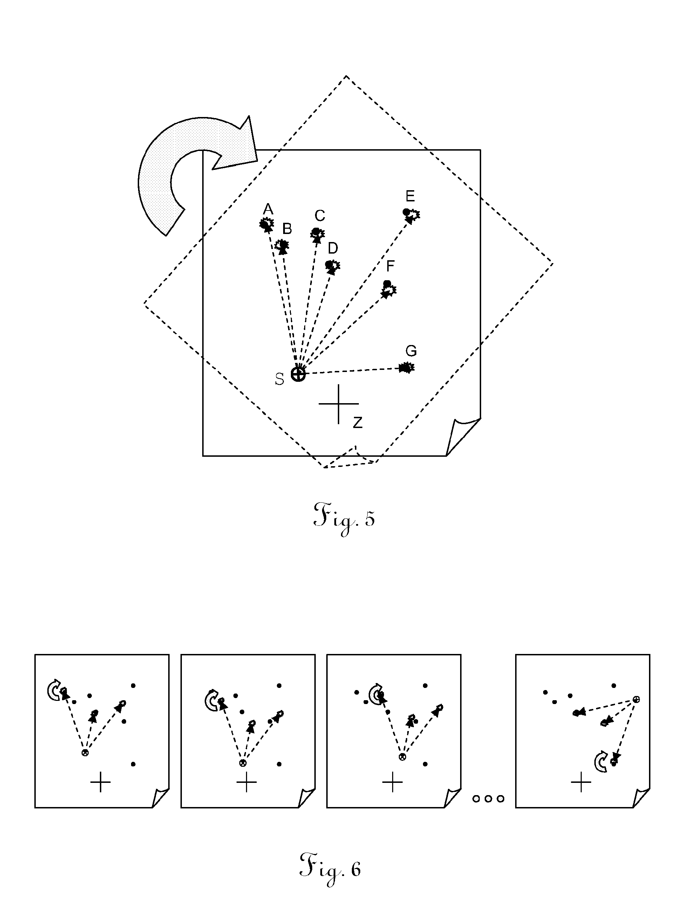

Fig.5 erläutert ein erstes Ausführungsbeispiel des erfindungsgemässen Positionsbestimmungsverfahrens. In diesem Beispiel entsprechen sich die Elemente der Bezugspunktmenge und der Referenzpunktmenge. Aus der Referenzpunktmenge wird ein die relative Anordnung der Referenzpunkte repräsentierendes Muster erzeugt. In gleicher Weise wird aus der Bezugspunktmenge ein Muster abgeleitet. Das Muster der Referenzpunkte entspricht in diesem Beispiel der Darstellung in Fig.4a, das Muster der Bezugspunkte dem der Fig.4b. Beide Muster werden nun gegeneinander verschoben und ggf. in ihrer Skalierung angepasst, bis eine Übereinstimmung der Muster innerhalb eines gewissen Toleranzbereichs erzielt ist, sodass eine Zuordnung der Punkte erfolgt. Im vorliegenden Beispiel wurden Punkt P₁ und A einander zugeordnet und als Rotationspunkt ausgewählt, um den das Muster der Referenzpunkte gegenüber dem der Bezugspunkte verdreht wurde. Nach erfolgter Übereinstimmung kann nun die relative Lage des Gerätes, d.h. der Stationierungspunkt S, gegenüber den Referenzpunkten auch im äusseren Bezugssystem abgeleitet bzw. in dieses übertragen und so die Position des Gerätes bestimmt werden. Neben dem hier rein exemplarisch ausgewählten Bezugspunkt A können auch andere Referenz- oder Bezugspunkte als Rotationspunkte gewählt werden.

Das Vergleichen und Identifizieren gemeinsamer Elemente von Referenz- und Bezugspunktmenge kann dabei durch mathematische Rotation einer Verteilung von Punkten in vektorieller oder Koordinatendarstellung erfolgen. Neben diesem Ansatz kann jedoch auch die dargestellten Ableitung eines Musters als graphischer Repräsentation erfolgen, für die zum Identifizieren und Zuordnen von Referenz- und Bezugspunkten in der Bildverarbeitung verschiedene bekannte und geeignete Verfahren zur Verfügung stehen, bspw. mittels Mustervergleich, wie z.B. Template-Matching. Solche Verfahren erlauben es insbesondere auch einzelne Teilmuster innerhalb grösserer Muster zu identifizieren, was z.B. relevant wird, wenn Bezugs- und Referenzpunktmengen in ihrer Mächtigkeit differieren.

Ein solcher Fall mit differierenden Bezugs- und Referenzpunktmengen kann mit dem in Fig.5 gezeigten Ansatz als Variante des ersten Ausführungsbeispiels des erfindungsgemässen Positionsbestimmungsverfahrens gelöst werden. In diesem Fall ist die Menge der Bezugspunkte grösser als die Referenzpunkte, was einer typischen Situation entspricht, in der aus der Menge der insgesamt vorhandenen Messpunkte nur ein Teil einsehbar bzw. anmessbar ist. Nur zu diesem Teil können Messungen durchgeführt werden, so dass die Referenzpunktmenge eine Teilmenge der Bezugspunktmenge darstellt. Neben der Problematik einer Zuordnung der Referenzpunkte zu den Bezugspunkten entsteht nun die zusätzliche Erschwernis, dass aus der Bezugspunktmenge die richtige Teilmenge ausgewählt werden muss. Im gezeigten Beispiel wurde wieder auf die Bezugspunktmenge der Fig.4b zurückgegriffen, jedoch erfolgt die Messung von einem anderen Stationierungspunkt aus und zu nur drei Bezugspunkten. Die entsprechenden Referenzpunkte sind in ihrer relativen Lage zum Messgerät durch die drei Pfeile dargestellt.

Wie in den Teilabbildungen dargestellt, wird das Muster der drei Referenzpunkte sukzessive jeweils um einen der Bezugspunkte rotiert und für jeden Punkt die Stellung der jeweils höchsten Übereinstimmung bestimmt, wobei im Beispiel die Bezugspunkte in ihrer Anordnung von links nach rechts durchlaufen werden. Nach Durchlaufen aller Bezugspunkte wird dann ein entsprechender Vergleich zwischen den jeweils besten Stellungen der Bezugspunkte durchgeführt. Im konkreten Beispiel zeigt die äusserst rechte Teilabbildung eine weitgehende Übereinstimmung bei einer bestimmten Stellung, so dass hieraus gleichzeitig die Zuordnung der Punkte und die Bestimmung der Position des Messgerätes erfolgen können.

Obwohl in den Figuren stets eine zweidimensionale Darstellung gewählt wurde, kann grundsätzlich auch ein dreidimensionales Muster erzeugt und entsprechend gehandhabt werden. Aufgrund der tatsächlichen Anordnung der Bezugspunkte bietet sich in der Praxis jedoch häufig eine zweidimensionale Darstellung und Verwendung der horizontalen Winkel an.

Die Darstellung als Muster bietet den Vorteil, dass nicht nur die Distanzen zum Messgerät sondern auch die Winkel und damit die relative Lage der Referenzpunkte zueinander in einem Vergleichsvorgang ausgewertet werden können. Demgegenüber kann jedoch auch der Informationsgehalt bzw. das Datenvolumen der zu korrelierenden Grössen verringert werden, z.B. indem nur die relativen Distanzen der Referenzpunkte zueinander verwendet werden.

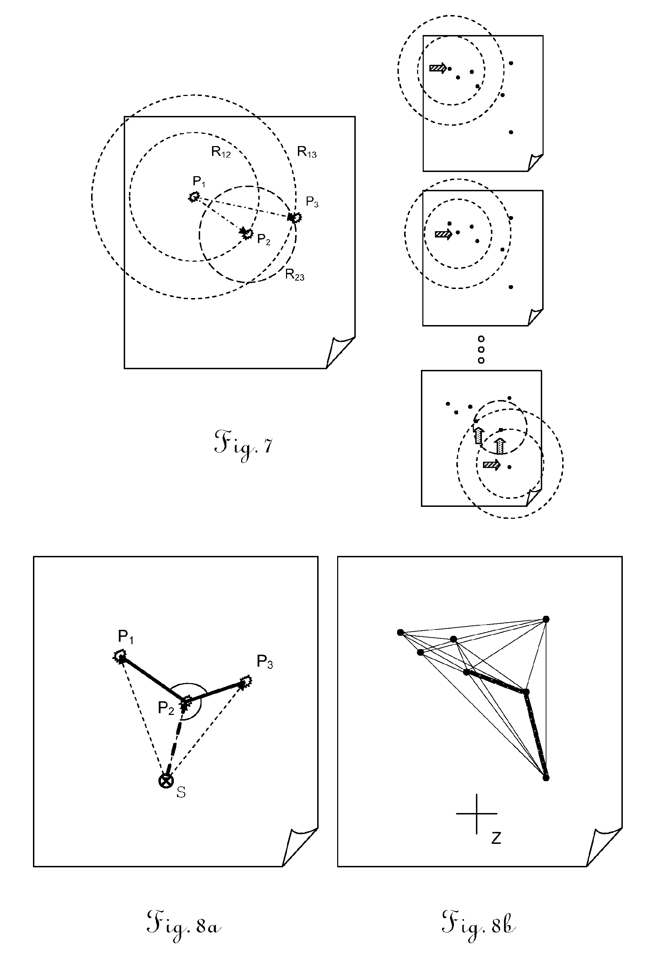

Ein solcher distanzbasierter Ansatz wird in Fig.7 als ein zweites Ausführungsbeispiels eines erfindungsgemässen Positionsbestimmungsverfahrens dargestellt. Im Gegensatz zum vorwiegend punktbasierten Ansatz des ersten Ausführungsbeispiels erfolgt hier die Betrachtung der Verbindung von Punkten. Aus den Messgrössen der Referenzpunkte P₁ bis P₃ werden hier exemplarisch die relativen Distanzen bzw. Radien R₁₂, R₁₃ und R₂₃ abgeleitet, die hier durch Kreise mit dem entsprechenden Radius um die Referenzpunkte dargestellt sind. Zum Identifizieren gemeinsamer Punkte werden die dem Referenzpunkt P₁ zugeordneten Radien R₁₂ und R₁₃ sukzessive den verschiedenen Bezugspunkten zugeordnet und überprüft, ob sich jeweils andere Bezugspunkte mit den entsprechenden Radien R₁₂ und R₁₃ auffinden lassen. Dieses Vorgehen ist in Fig.7 in den rechten Teilfiguren von oben nach unten ablaufend dargestellt, so dass beim Identifizieren und Zuordnen ein Vergleich der relativen Abstände der Referenzpunkte mit Abständen der Bezugspunkte erfolgt. In der untersten Teilfigur ist für den äusserst rechten Punkt der Bezugspunktmenge diese Übereinstimmung feststellbar, d.h. es können zwei auf Kreisen mit dem jeweiligen Radius R₁₂ und R₁₃ zu diesem ersten Bezugspunkt liegende andere zwei Bezugspunkte identifiziert werden. Zur Überprüfung wird nun im nächsten Schritt für den näherliegenden der beiden Bezugspunkte überprüft, ob dieser zum dritten Bezugspunkt in einer Distanz liegt, die dem Radius R₂₃ entspricht, was in diesem Beispiel der Fall ist.

Bei diesem Verfahren erfolgt somit für einen Start-Referenzpunkt eine Identifikation von möglichen, diesem entsprechenden Bezugspunkten anhand der dem Start-Referenzpunkt zugeordneten Radien bzw. Distanzen, wobei zur Feststellung einer Übereinstimmung ein entsprechender Schwellenwert bzw. eine zulässige Abweichung gesetzt wird. Die Menge der möglichen Bezugspunktkandidaten wird dann anhand weiteren Radien bzw. Distanzen zwischen den übrigen Referenzpunkten weiter eingeschränkt, bis im Idealfall nur noch eine einzige Zuordnung verbleibt. Der Lösungsraum möglicher Zuordnung, d.h. Identifikationen gemeinsamer Elemente, wird somit anhand der fortschreitenden Berücksichtigung relativer Lagen bzw. Abstände von Referenzpunkten zueinander eingeschränkt. Im Fall einer fehlenden Übereinstimmung, d.h. einer leeren Lösungsmenge, oder mehreren möglichen Übereinstimmungen, d.h. einer Mehrdeutigkeit der Lösung, kann bspw. der Schwellenwert verändert werden, so dass sich das Akzeptanzverhalten ändert.

Diese erste Variante des zweiten Ausführungsbeispiels des erfindungsgemässen Positionsbestimmungsverfahrens nutzt somit lediglich den Radius bzw. die ungerichtete Distanz zwischen den Referenzpunkten. Deren relative Lage zueinander aus den Überschneidungen der Radien folgt.

Fig.8a-b zeigen eine zweite Variante des zweiten Ausführungsbeispiels des erfindungsgemässen Positionsbestimmungsverfahrens, bei dem nicht mehr nur einzelne Distanzen bzw. Radien der Referenzpunkte mit denen der Bezugspunkte verglichen werden, sondern es werden mehrere, miteinander in geometrischer Beziehung stehende Distanzen genutzt und verglichen, so dass das Identifizieren und Zuordnen auch mittels Verfahren der graphischen Optimierung erfolgen kann.

Wie in der Fig.8a dargestellt, werden aus der relativen Lage der Referenzpunkte P₁ bis P₃ Distanzen als Verbindungslinien zwischen den Punkten abgeleitet und als Kanten eines Graphen dargestellt, dessen Knoten durch die Referenzpunkte P₁ bis P₃ gebildet werden. In diesem Beispiel werden nur zwei Kanten verwendet, welche alle drei Referenzpunkte P₁ bis P₃ verbinden. Damit wird die relative Lage der Referenzpunkte P₁ bis P₃ durch einen Referenzpunktgraphen mit den Referenzpunkten P₁ bis P₃ als Knoten und relativen Abständen der Referenzpunkte P₁ bis P₃ als Kanten repräsentiert. Dabei kann der Graph als vollständiger Referenzpunktgraph, der alle relativen Abstände der Referenzpunkte P₁ bis P₃ untereinander enthält oder auch mit einer reduzierten Zahl von Verbindungen, d.h. Kanten, erzeugt werden.

Die Verbindung zum Stationierungspunkt S kann dabei durch eine oder mehrere Kanten in den Graphen inkludiert werden, wie in Fig.8a gestrichelt dargestellt, wobei diese Kanten jedoch nicht zu Vergleich mit den Bezugspunkten verwendet oder dabei unterdrückt bzw. toleriert werden.

Wie in diesem Beispiel dargestellt, kann ein Gerüst oder Minimalgerüst des Graphen abgeleitet werden, bei dem alle Referenzpunkte P₁ bis P₃ durch nur wenige charakteristische Kanten verbunden sind. Zur Erzeugung von Graphen und zur Ableitung von Gerüsten bzw. Spannbäumen oder Minimalgerüsten bzw. Minimalspannbäumen stehen in der graphischen Optimierung entsprechende Algorithmen zur Verfügung. So können nach der Erzeugung eines Graphen mit allen möglichen Verbindungen, d.h. Kanten, zwischen allen Referenzpunkten wieder Kanten entfernt werden, um einen minimalen Spannbaum abzuleiten. Hierfür eignen sich verschiedene Ansätze, wobei bspw. aufgrund des Laufzeitverhaltens insbesondere Greedy-Ansätze, welche jeweils die lokal beste Lösung auswählen, Verwendung finden können. Beispiele hierfür sind die Algorithmen von Prim oder Kruskal. Das Erfordernis einer Minimalität ist jedoch nicht unbedingt erforderlich. Zur schnellen Identifizierbarkeit kann es unter Umständen vorteilhaft sein, einen Spannbaum aus möglichst charakteristischen und damit leicht identifizierbaren Kanten zusammenzusetzen, z.B. aus den längsten und kürzesten der vorhandenen Kanten des Graphen.

In grundsätzlich gleicher Weise werden auch die Bezugspunkte in einen Graphen überführt, wobei die relative Lage der Bezugspunkte durch einen Bezugspunktgraphen mit Bezugspunkten als Knoten und relativen Abständen der Bezugspunkte als Kanten repräsentiert wird. Allerdings sollte dies, wie in Fig.8b dargestellt, insbesondere ein vollständiger Bezugspunktgraph sein, der alle relativen Abstände der Bezugspunkte untereinander enthält, da in diesem Verbindungsnetzwerk der Referenzpunktgraph identifiziert werden soll.

In der einfachsten Form wird für die Referenzpunktmenge in einem ersten Schritt nur eine einzige Kante, z.B. die längste Kante, als erste Kante verwendet, deren Lage im Bezugspunktgraphen identifiziert wird. Hierfür können bspw. alle Kanten des Bezugspunktgraphen anhand ihrer Länge in einer Tabelle abgelegt werden, so dass ein schneller Vergleich möglich wird. Nachfolgend wird die zweitlängste Kante oder die jeweils längste, an die erste Kante angrenzende Kante im Bezugspunktegraphen identifiziert. Bei der Identifikation von übereinstimmenden Kanten oder Bäumen werden die Kanten somit in Reihenfolge ihrer Länge verglichen werden.

Wie in Fig.8a und 8b dargestellt, können jedoch auch Gerüste bzw. Bäume in Bezugspunktgraphen identifiziert werden, wofür im Stand der Technik Suchverfahren bekannt sind und auch Verfahren der Bildverarbeitung genutzt werden können. Der Vorteil hierbei ist, dass auch die Anordnung der Kanten zueinander, d.h. die relative Lage der Verbindungslinien zwischen den Referenzpunkten, zur Identifikation genutzt wird. In Fig.8b ist der im Bezugspunktgraph identifizierte und damit eingepasste Referenzpunktgraph mit dicken Linien dargestellt. Durch die Nutzung eines Graphen und dessen Identifikation in einem anderen Graphen werden gleichzeitig die gemeinsamen Punkte, wie auch die Orientierung zueinander bestimmt, so dass der Stationierungspunkt anhand der Verbindungskanten direkt in seiner Position zum Ursprung Z des äusseren Bezugssystems abgeleitet werden kann, was in Fig.8b aus Anschaulichkeitsgründen jedoch nicht dargestellt ist.

Bei der zweiten Variante des zweiten Ausführungsbeispiel des erfindungsgemässen Positionsbestimmungsverfahrens wird somit beim Identifizieren und Zuordnen eine Identifikation von übereinstimmenden Kanten oder Bäumen von Referenzpunkt- und Bezugspunktgraphen vorgenommen, die gleichzeitig die gemeinsamen Punkte und die Position des Stationierungspunktes S bzw. des geodätischen Messgerätes ableitet.

Nach der entsprechenden Identifikation des Referenzpunktgraphen im Bezugspunktgraphen kann der Stationierungspunkt S anhand der in Fig.8a gestrichelt dargestellten Verbindungskanten in Bezugs zum Ursprung Z gesetzt und damit die Position des Messgerätes bestimmt werden.

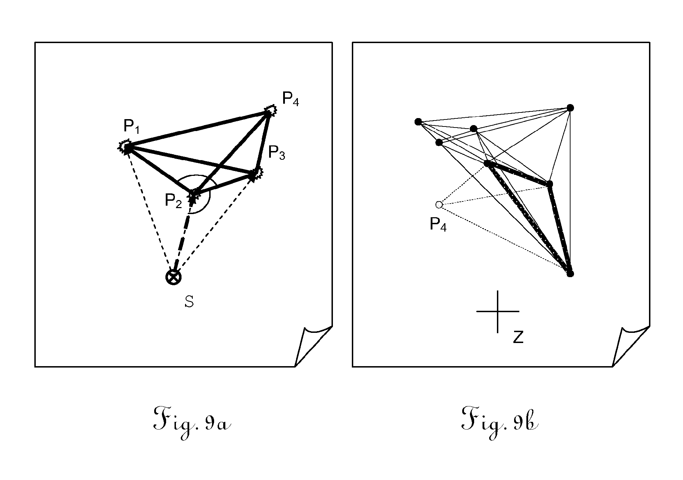

Die Verwendung eines vollständigen Graphen mit allen Kanten wird in Fig.9a-b als dritte Variante mit einer exemplarischen Behandlung von Fehlmessungen für das zweite Ausführungsbeispiel des erfindungsgemässen Positionsbestimmungsverfahrens erläutert.

Wie in Fig.9a gezeigt, werden insgesamt vier Referenzpunkte P₁ bis P₄ vermessen, für die alle möglichen Verbindungen als Kanten abgeleitet und zur Erstellung des Graphen übernommen werden, wobei wiederum der Stationierungspunkt S als ein weiterer Knoten in den Graphen eingebunden werden kann. Dieser wird allerdings wie in Fig.8a-b beim Vergleich mit dem Bezugspunktgraphen ausser Betrachtung gelassen.

Der Referenzpunktgraph weist nun eine grössere Zahl von im Bezugspunktgraphen zu identifizierenden Kanten auf, so dass der Zuordnungsvorgang komplexer wird. Auf der anderen Seite stehen jedoch mehr Kanten zur Verfügung als z.B. im Fall eines Minimalgerüstes. Dies erlaubt bspw. auch die Identifikation von fehlerhaften Messungen, d.h. von Knoten, die kein korrespondierendes Element in der Bezugspunktmenge aufweisen. In diesem Beispiel beruht der Referenzpunkt P₄ auf einer Fehlmessung, so dass sich kein entsprechender Bezugspunkt zuordnen lässt. Anhand der Übereinstimmung der anderen Kanten und dem völligen Fehlen der den Punkt P₄ kontaktierenden Kanten im Bezugspunktgraphen kann jedoch abgeschätzt werden, dass P₄ eine Fehlmessung ist, so dass dieser Punkt unberücksichtigt bleibt oder aus dem Referenzpunktgraphen entfernt wird. Die Verwendung einer grösseren Anzahl von Kanten erlaubt somit eine verbesserte Identifikation von nicht-gemeinsamen Punkten und damit von falschen oder fehlerhaften Messungen.

Es versteht sich, dass diese dargestellten Figuren nur mögliche Ausführungsbeispiele schematisch darstellen. Die verschiedenen Ansätze können erfindungsgemäss miteinander sowie mit Verfahren des Stands der Technik aus Bildverarbeitung und graphischer Optimierung kombiniert werden. Auch können nach der erfolgten Bestimmung der gemeinsamen Punkte, d.h. Zuordnung von Referenz- zu Bezugspunkten, bisherige Verfahren zur Berechnung des Stationierungspunktes zur Anwendung kommen.

## Patentansprüche

1. Positionsbestimmungsverfahren für ein eine Entfernungs- und Winkelmessfunktionalität aufweisendes geodätisches Gerät, insbesondere einen Theodoliten oder eine Totalstation (1), mit einer Bezugspunktmenge von anmessbaren Bezugspunkten (A-G), deren Positionen in einem äusseren Bezugssystem bekannt ist, und mit
• einem Bestimmen der relativen Lage von geodätischem Gerät und Referenzpunkten (P₁-P₇) einer Referenzpunktmenge durch Messen von jeweils
- Entfernung und
- wenigstens einem Winkel
von dem geodätischen Gerät zu den Referenzpunkten als Referenzgrössen, wobei die Referenzgrössen in einem gerätebezogenen Bezugssystem bestimmt werden und Referenzpunktmenge und Bezugspunktmenge gemeinsame Elemente aufweisen,
• einem Bestimmen der Position (S) des geodätischen Gerätes im äusseren Bezugssystem aus den Referenzpunkten (P₁-P₇),
**dadurch gekennzeichnet, dass**
• ein Ableiten der relativen Lage der Referenzpunkte (P₁-P₇) aus den Referenzgrössen und
• ein Identifizieren und Zuordnen der gemeinsamen Elemente anhand der relativen Lage der Referenzpunkte (P₁-P₇)
erfolgen.

2. Positionsbestimmungsverfahren nach Anspruch 1,
**dadurch gekennzeichnet, dass**
das Identifizieren und Zuordnen der gemeinsamen Elemente vor dem Bestimmen der Position (S) des geodätischen Gerätes erfolgt.

3. Positionsbestimmungsverfahren nach Anspruch 1,
**dadurch gekennzeichnet, dass**
das Identifizieren und Zuordnen der gemeinsamen Elemente und das Bestimmen der Position (S) des geodätischen Gerätes gemeinsam erfolgen.

4. Positionsbestimmungsverfahren nach einem der vorangehenden Ansprüche,
**dadurch gekennzeichnet, dass**
relative Abstände der Referenzpunkte (P₁-P₇) zueinander bestimmt werden.

5. Positionsbestimmungsverfahren nach Anspruch 4,
**dadurch gekennzeichnet, dass**
beim Identifizieren und Zuordnen ein Vergleich der relativen Abstände der Referenzpunkte (P₁-P₇) mit Abständen der Bezugspunkte (A-G) erfolgt.

6. Positionsbestimmungsverfahren nach einem der vorangehenden Ansprüche,
**dadurch gekennzeichnet, dass**
ein die relative Anordnung der Referenzpunkte (P₁-P₇) repräsentierendes Muster erzeugt wird.

7. Positionsbestimmungsverfahren nach Anspruch 6,
**dadurch gekennzeichnet, dass**
das Identifizieren und Zuordnen mittels Bildverarbeitung erfolgt, insbesondere mittels Mustervergleich, wie z.B. Template-Matching.

8. Positionsbestimmungsverfahren nach Anspruch 6 oder 7,
**dadurch gekennzeichnet, dass**
beim Identifizieren und Zuordnen das Muster um Bezugspunkte (A-G) rotiert wird.

9. Positionsbestimmungsverfahren nach einem der vorangehenden Ansprüche,
**dadurch gekennzeichnet, dass**
das Identifizieren und Zuordnen mittels graphischer Optimierung erfolgt.

10. Positionsbestimmungsverfahren nach Anspruch 9,
**dadurch gekennzeichnet, dass**
die relative Lage der Referenzpunkte (P₁-P₇) durch einen Referenzpunktgraphen mit Referenzpunkten (P₁-P₇) als Knoten und relativen Abständen der Referenzpunkte (P₁-P₇) als Kanten repräsentiert wird, insbesondere als vollständiger Referenzpunktgraph, der alle relativen Abstände der Referenzpunkte (P₁-P₇) untereinander enthält.

11. Positionsbestimmungsverfahren nach Anspruch 9 oder 10,
**dadurch gekennzeichnet, dass**
die relative Lage der Bezugspunkte (A-G) durch einen Bezugspunktgraphen mit Bezugspunkten (A-G) als Knoten und relativen Abständen der Bezugspunkte (A-G) als Kanten repräsentiert wird, insbesondere als vollständiger Bezugspunktgraph, der alle relativen Abstände der Bezugspunkte (A-G) untereinander enthält.

12. Positionsbestimmungsverfahren nach Anspruch 10 und 11,
**dadurch gekennzeichnet, dass**
beim Identifizieren und Zuordnen eine Identifikation von übereinstimmenden Kanten oder Bäumen von Referenzpunkt- und Bezugspunktgraphen erfolgt, insbesondere durch Suchverfahren.

13. Positionsbestimmungsverfahren nach Anspruch 12,
**dadurch gekennzeichnet, dass**
bei der Identifikation von übereinstimmenden Kanten oder Bäumen Kanten in Reihenfolge ihrer Länge verglichen werden.

14. Positionsbestimmungsverfahren nach einem der Ansprüche 10 bis 13,
**dadurch gekennzeichnet, dass**
ein Gerüst oder Minimalgerüst des Graphen abgeleitet wird.

15. Positionsbestimmungsverfahren nach einem der vorangehenden Ansprüche,
**dadurch gekennzeichnet, dass**
ein automatisiertes Erfassen und Vermessen der Referenzpunkte (P₁-P₇) erfolgt.

16. Computerprogrammprodukt, das auf einem maschinenlesbaren Träger gespeichert ist, oder Computer-Daten-Signal, verkörpert durch eine elektromagnetische Welle, mit Programmcode zur Durchführung des Verfahrens nach einem der Ansprüche 1 bis 15, insbesondere wenn das Programm in einem Computer ausgeführt wird.
